(19) Europäisches Patentamt
European Patent Office
Office européen des brevets

(11) **EP 2 742 246 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **12745824.8**

(22) Anmeldetag: **03.08.2012**

(51) Int Cl.:
*F15B 13/04* *(2006.01)*      *F16H 61/02* *(2006.01)*
*F16K 11/07* *(2006.01)*

(86) Internationale Anmeldenummer:
**PCT/EP2012/065240**

(87) Internationale Veröffentlichungsnummer:
**WO 2013/020913 (14.02.2013 Gazette 2013/07)**

(54) **SCHIEBERVENTIL MIT EINEM DURCH EINEN AKTOR BEAUFSCHLAGBAREN VENTILSCHIEBER**

SLIDING VALVE WITH A VALVE SLIDE WHICH CAN BE ACTED UPON BY AN ACTUATOR

SOUPAPE À TIROIR MUNIE D'UN TIROIR POUVANT ÊTRE SOUMIS À L'ACTION D'UN ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2011 DE 102011080669**
**01.12.2011 DE 102011087546**

(43) Veröffentlichungstag der Anmeldung:
**18.06.2014 Patentblatt 2014/25**

(73) Patentinhaber: **Robert Bosch GmbH**
**70442 Stuttgart (DE)**

(72) Erfinder: **FLEISCHER, Walter**
**70469 Stuttgart (DE)**

(56) Entgegenhaltungen:
**WO-A1-2006/111031      DE-A1- 19 938 884**
**JP-A- H09 269 084      US-A1- 2003 221 731**

## Beschreibung

Stand der Technik

Die Erfindung betrifft ein Schieberventil nach dem Oberbegriff des Anspruchs 1 sowie ein Automatikgetriebe nach dem nebengeordneten Patentanspruch.

Vom Markt her bekannt sind Automatikgetriebe von Kraftfahrzeugen, in denen eine oder mehrere Getriebekupplungen bzw. Stellzylinder zur Betätigung dieser Kupplungen verwendet werden. Insbesondere werden doppelt wirkende Hydraulikzylinder verwendet, welche zwei durch einen Kolben getrennte hydraulische Kammern aufweisen und durch eine entsprechende Druckbeaufschlagung aktiv in beiden Bewegungsrichtungen verstellt werden können.

Zum Schalten des hydraulischen Volumenstroms werden beispielsweise Schieberventile in einer 4/3-Ausführung verwendet. Häufig weisen solche Schieberventile eine eingebaute Druckfeder ("Ventilfeder") sowie einen gegen die Druckfeder wirkenden Aktor auf. Der Aktor ist beispielsweise ein Elektromagnet. Ein jeweiliges Kräftegleichgewicht zwischen dem Aktor und der Ventilfeder bestimmt eine entsprechende axiale Position eines in dem Schieberventil bewegbaren Ventilschiebers. Veröffentlichungen aus dem hier relevanten technischen Gebiet sind die DE 199 38 884 A1, die US 2003/0221731 A1 und die WO 2006/111031 A1 und die JPH09269084 A.

Offenbarung der Erfindung

Das der Erfindung zugrunde liegende Problem wird durch ein Schieberventil nach Anspruch 1 sowie durch ein Automatikgetriebe nach dem nebengeordneten Patentanspruch gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Das erfindungsgemäße Schieberventil hat den Vorteil, dass es mit zwei Arbeitsanschlüssen derart betrieben werden kann, dass dann, wenn einem Aktor des Schieberventils keine Energie zugeführt wird, beide Arbeitsanschlüsse von einem einen Versorgungsdruck aufweisenden hydraulischen Zulauf getrennt und mit einem hydraulischen Ablauf verbunden sind ("Nullabschaltung"). In diesem Zustand kann ein unerwünschter Aufbau eines hydraulischen Drucks an den Arbeitsanschlüssen als Folge von Leckagen verhindert werden. Ebenso kann beim Betätigen des Schieberventils der Druckaufbau an dem jeweiligen Arbeitsanschluss nahezu ungehindert erfolgen. Insbesondere ist es nicht erforderlich, dass ein in dem Schieberventil axial bewegbarer Ventilschieber axiale und/oder radiale Bohrungen aufweist.

Dadurch können, beispielsweise beim Betätigen eines doppelt wirkenden Hydraulikzylinders, Energie gespart und Kosten gesenkt werden.

Um einen Kolben des doppelt wirkenden Hydraulikzylinders mittels des Schieberventils zu steuern, wird jeweils eine von zwei hydraulischen Kammern mit dem Versorgungsdruck eines Fluids (Hydrauliköl) beaufschlagt. Dabei wird zugleich die jeweils andere Kammer mit einem vergleichsweise geringen Druck beaufschlagt ("entlüftet"), indem diese beispielsweise mit einem hydraulischen Ablauf verbunden wird. Wird der Kolben dagegen nicht (mehr) bewegt, so kann mittels des Schieberventils der Versorgungsdruck von dem Hydraulikzylinder abgeschaltet und beide Kammern mit dem hydraulischen Ablauf verbunden werden. In beiden Kammern herrscht dann der gleiche niedrige Druck. Da eine eventuelle durch den Zulaufanschluss verursachte Leckage von Fluid in den hydraulischen Ablauf strömen kann, kann der Kolben in seiner jeweiligen Position verharren.

Das erfindungsgemäße Schieberventil weist einen Ventilschieber auf, welcher durch einen Aktor in einer ersten Richtung und durch eine Beaufschlagungseinrichtung in einer zweiten, der ersten entgegengesetzten Richtung beaufschlagt werden kann. Die Beaufschlagungseinrichtung ist vorzugsweise eine axial wirkende Ventilfeder, welche beispielsweise als Schraubenfeder ausgeführt ist. Zur Steuerung des doppelt wirkenden Hydraulikzylinders weist das Schieberventil einen ersten und einen zweiten Arbeitsanschluss, sowie vorzugsweise einen Zulaufanschluss und einen ersten und einen zweiten Ablaufanschluss (neben dem jeweiligen Arbeitsanschluss) auf. Der Zulaufanschluss bzw. die Ablaufanschlüsse können in Abhängigkeit von einer axialen Position des Ventilschiebers mit dem jeweiligen Arbeitsanschluss hydraulisch verbunden werden. Dazu weist der Ventilschieber entsprechende Steuerabschnitte an seinem Umfang auf. Erfindungsgemäß ist vorgesehen, dass ein erster dem ersten Arbeitsanschluss zugeordneter Steuerabschnitt mindestens einen ersten und einen zweiten Teil-Steuerabschnitt und eine axial dazwischen angeordnete und vorzugsweise radial umlaufende Ausnehmung umfasst. Die Ausnehmung ist derart ausgebildet, dass sie in Abhängigkeit von einer axialen Position des Ventilschiebers den ersten Arbeitsanschluss mit einem bzw. dem Ablaufanschluss hydraulisch verbinden kann. Dies ist mit einem vergleichsweise großen hydraulischen Querschnitt insbesondere in jener Position des Ventilschiebers möglich, bei welcher ein hydraulischer Druckaufbau an dem zweiten Arbeitsanschluss erfolgt. Es ist möglich, die Ausnehmung gegebenenfalls nur über einen Teil des Umfangs des Ventilschiebers auszubilden.

Bei dem erfindungsgemäßen Schieberventil sind eine axiale Position und/oder ein axiales Maß des ersten Steuerabschnitts sowie der ersten und zweiten Teil-Steuerabschnitte, und eine axiale Position und/oder ein axiales Maß des zweiten Steuerabschnitts und des dritten Steuerabschnitts in Bezug auf den Ventilschieber derart bemessen, dass dann, wenn der Aktor den Ventilschieber nicht beaufschlagt, der erste Arbeitsanschluss mit dem Ablaufanschluss und/oder der zweite Arbeitsanschluss mit dem Ablaufanschluss hydraulisch verbunden sind. Damit wird erfindungsgemäß ein hydraulischer "Entlüftungsquerschnitt" zwischen dem ersten Arbeitsanschluss und dem ersten Ablaufanschluss in einem stromlosen Zustand des Aktors erzielt, so dass sowohl der erste als auch der zweite Arbeitsanschluss nicht nur von dem Zulaufanschluss hydraulisch getrennt sind, sondern ebenso jeweils mit dem ersten bzw. dem zweiten Ablaufanschluss verbunden sind. Dadurch können beide Kammern des doppelt wirkenden Hydraulikzylinders im Wesentlichen drucklos gestellt oder zumindest mit einem gleichen niedrigen Druck versorgt werden. Ein Kolben des doppelt wirkenden Hydraulikzylinders kann somit in seiner aktuellen Lage verharren, ohne dass der Aktor dafür Energie benötigt.

Weiterhin ist vorgesehen, dass der Ventilschieber einen dem Zulaufanschluss zugeordneten zweiten Steuerabschnitt aufweist, welcher in Abhängigkeit von der axialen Position des Ventilschiebers den Zulaufanschluss alternativ mit dem ersten Arbeitsanschluss oder mit dem zweiten Arbeitsanschluss hydraulisch verbinden kann. Vorzugsweise ist eine axiale Länge des zweiten Steuerabschnitts zumindest geringfügig größer als eine Erstreckung des Zulaufanschlusses parallel zu einer Längsachse des Ventilschiebers. Dadurch können beide Steuerkanten des zweiten Steuerabschnitts unmittelbar im Bereich des Zulaufanschlusses wirken. In einer Mittelstellung des Ventilschiebers bzw. des zweiten Steuerabschnitts ist der Zulaufanschluss vollständig geschlossen. Somit kann der dem Zulaufanschluss zugeordnete zweite Steuerabschnitt die Steuerung des ersten Arbeitsanschlusses zumindest teilweise übernehmen, so dass der dem ersten Arbeitsanschluss zugeordnete erste Steuerabschnitt erfindungsgemäß ausgebildet sein kann.

Eine bevorzugte axiale Anordnung der hydraulischen Anschlüsse des erfindungsgemäßen Schieberventils sieht vor, dass ausgehend von einem Endabschnitt des Ventilschiebers, welcher von der Beaufschlagungseinrichtung beaufschlagt wird, in einer axialen Reihenfolge der erste Ablaufanschluss, der erste Arbeitsanschluss, der Zulaufanschluss, der zweite Arbeitsanschluss, und ein zweiter Ablaufanschluss angeordnet sind. Dadurch wird eine besonders einfache und zweckmäßige Ausführungsform des Schieberventils beschrieben.

Alternativ kann ausgehend von einem Endabschnitt des Ventilschiebers, welcher von der Beaufschlagungseinrichtung beaufschlagt wird, in einer axialen Reihenfolge ein zweiter Ablaufanschluss, der zweite Arbeitsanschluss, der Zulaufanschluss, der erste Arbeitsanschluss, und ein erster Ablaufanschluss angeordnet sein. In dieser zweiten Ausgestaltung der Erfindung kann das Schieberventil axial besonders kurz bauen und ermöglicht daher eine vergleichsweise kompakte Konstruktion. Ebenfalls werden die hydraulischen Funktionen des ersten und des zweiten Arbeitsanschlusses in Bezug auf die oben angegebene erste Ausgestaltung der Erfindung vertauscht, wodurch sich erweiterte konstruktive Möglichkeiten ergeben.

Weiterhin ist vorgesehen, dass ein Verhältnis einer axialen Länge des ersten Steuerabschnitts zu einer Erstreckung des ersten Arbeitsanschlusses parallel zur Längsachse des Ventilschiebers einen Wert von in etwa 0,9 bis 1,1 aufweist, entsprechend einer Formel

$$\frac{h\_Kolben}{h\_Kanal} = 0,9 \quad bis \quad 1,1.$$

Dadurch wird eine erste mathematische Beziehung beschrieben, welche es ermöglicht, während der "Nullabschaltung" den ersten Arbeitsanschluss einerseits wirksam vom Zulaufanschluss zu trennen, und andererseits mit ausreichendem Querschnitt mit dem ersten Ablaufanschluss zu verbinden.

Ergänzend ist vorgesehen, dass ein Verhältnis der Summe einer axialen Länge des ersten und des zweiten Teil-Steuerabschnitts und einer axialen Länge eines dem Steuerabschnitt zugeordneten Steuerbereichs an einer den Ventilschieber radial führenden Längsbohrung des Schieberventils zu einer axialen Länge des ersten Steuerabschnitts einen Wert von in etwa kleiner oder gleich 0,7 aufweist, entsprechend einer Formel

$$\frac{a+b+c}{h\_Kolben} \le 0,7.$$

Diese zweite mathematische Beziehung kann vorteilhaft in Ergänzung zu der oben beschriebenen ersten Formel zur Bemessung des Schieberventils verwendet werden. Das beschriebene Verhältnis der axialen Längen a, b und c ("Abdichtlängen") zu der axialen Länge h_Kolben ermöglicht es insbesondere beim Druckaufbau an dem zweiten Arbeitsanschluss, einen genügenden Querschnitt zur "Entlüftung" des ersten Arbeitsanschlusses zu erreichen.

Vorgesehen ist ferner, dass dann, wenn der Aktor den Ventilschieber mit einer ersten Kraft beaufschlagt, der erste Arbeitsanschluss mit dem Zulaufanschluss und der zweite Arbeitsanschluss mit dem Ablaufanschluss hydraulisch verbunden sind, und dass dann, wenn der Aktor den Ventilschieber mit einer zweiten Kraft beaufschlagt, der erste Arbeitsanschluss mit dem Ablaufanschluss und der zweite Arbeitsanschluss mit dem Ablaufanschluss hydraulisch verbunden sind, und dass dann, wenn der Aktor den Ventilschieber mit einer dritten Kraft beaufschlagt, der erste Arbeitsanschluss mit dem Ablaufanschluss und der zweite Arbeitsanschluss mit dem Zulaufanschluss hydraulisch verbunden sind. Diese erste Ausgestaltung ordnet den ersten Steuerabschnitt und damit den ersten und den zweiten Teil-Steuerabschnitt dem ersten Arbeitsanschluss hydraulisch zu, welcher zu der Beaufschlagungseinrichtung axial näher angeordnet ist als der zweite Arbeitsanschluss. Damit werden erste Möglichkeiten beschrieben, das Schieberventil konstruktiv auszuführen beziehungsweise es für eine jeweilige hydraulische Steuerung anzuwenden.

Eine besonders geeignete Anwendung des erfindungsgemäßen Schieberventils ist die Steuerung eines doppelt wirkenden Hydraulikzylinders in einem Automatikgetriebe eines Kraftfahrzeugs. Insbesondere kann Energie zur Ansteuerung des Aktors in solchen

Phasen gespart werden, in denen der Hydraulikzylinder keine Arbeitsbewegung ausführt.

Nachfolgend werden beispielhafte Ausführungsformen der Erfindung unter Bezugnahme auf die Zeichnung erläutert. In der Zeichnung zeigen:

Figur 1 eine erste Schnittdarstellung eines axialen Abschnitts einer ersten Ausführungsform eines Schieberventils;

Figur 2 eine Schnittansicht des Schieberventils von Figur 1 in einer ersten Position;

Figur 3 eine Schnittansicht des Schieberventils von Figur 1 in einer zweiten Position;

Figur 4 eine Schnittansicht des Schieberventils von Figur 1 in einer dritten Position;

Figur 5 eine Schnittansicht des Schieberventils von Figur 1 in einer vierten Position.

Figur 6 eine Schnittansicht des Schieberventils in einer zweiten Ausführungsform und in einer ersten Position;

Figur 7 eine Schnittansicht des Schieberventils von Figur 6 in einer zweiten Position;

Figur 8 eine Schnittansicht des Schieberventils von Figur 6 in einer dritten Position; und

Figur 9 eine Schnittansicht des Schieberventils von Figur 6 in einer vierten Position.

Es werden für funktionsäquivalente Elemente und Größen in allen Figuren auch bei unterschiedlichen Ausführungsformen die gleichen Bezugszeichen verwendet.

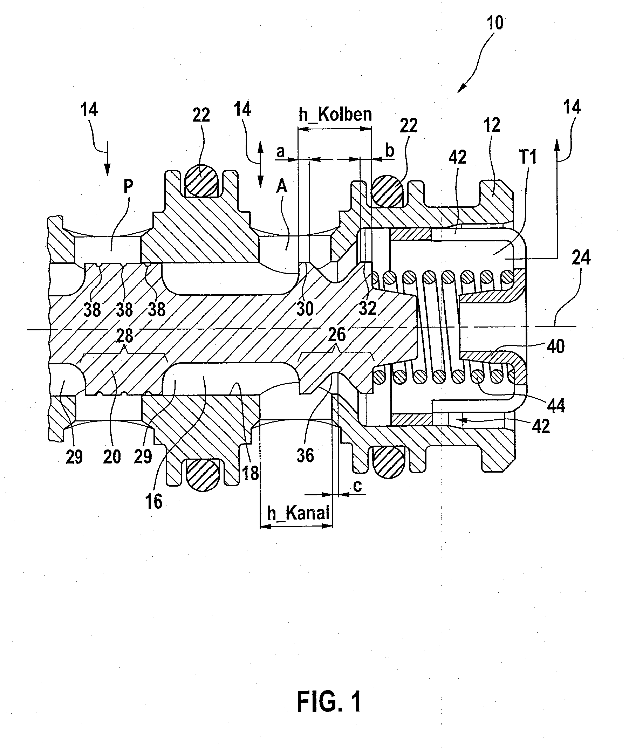

Figur 1 zeigt einen axialen Abschnitt eines Schieberventils 10 einer ersten Ausführungsform in einer Schnittdarstellung. Das Schieberventil 10 umfasst ein Gehäuse 12, welches in der Ansicht der Figur 1 einen Zulaufanschluss P, einen ersten Arbeitsanschluss A und einen ersten Ablaufanschluss T1 aufweist. Der Zulaufanschluss P und der erste Arbeitsanschluss A sind vorliegend mittels radialer Bohrungen in dem Gehäuse 12 ausgeführt. Der erste Ablaufanschluss T1 ist axial an einem in der Zeichnung rechten Endabschnitt des Schieberventils 10 ausgeführt. Drei Pfeile 14 veranschaulichen die an den jeweiligen Anschlüssen vorgesehenen möglichen Strömungsrichtungen eines Fluids 16. Der Zulaufanschluss P und der erste Arbeitsanschluss A münden in eine axiale Längsbohrung 18 des Gehäuses 12, in welcher ein zylindrischer Ventilschieber 20 gleitend und geführt angeordnet ist. Weiterhin weist das Gehäuse 12 auf seiner Außenseite radial umlaufende Dichtelemente 22 auf. Die in der Zeichnung sichtbaren Hohlräume des Schieberventils 10 sind im Wesentlichen mit dem Fluid 16 (Hydrauliköl) gefüllt. Das Schieberventil 10 und der Ventilschieber 20 sind zumindest teilweise rotationssymmetrisch um eine Längsachse 24 ausgeführt.

Der Ventilschieber 20 weist in der Ansicht der Figur 1 je einen ersten und zweiten Steuerabschnitt 26 und 28 sowie zwei sich axial erstreckende radial umlaufende und neben den Steuerabschnitten 26 und 28 angeordnete Ausnehmungen 29 auf. Der erste Steuerabschnitt 26 ist in einer axialen Umgebung des Arbeitsanschlusses A angeordnet und somit dem Arbeitsanschluss A hydraulisch zugeordnet. Der erste Steuerabschnitt 26 weist einen ersten Teil-Steuerabschnitt 30 mit der axialen Länge a und einen zweiten Teil-Steuerabschnitt 32 mit der axialen Länge b auf. Axial zwischen dem ersten Teil-Steuerabschnitt 30 und dem zweiten Teil-Steuerabschnitt 32 ist eine radial umlaufende Ausnehmung 36 angeordnet. Ein den Teil-Steuerabschnitten 30 und 32 zugeordneter Steuerbereich des Gehäuses 12 weist eine axiale Länge c auf. Ein axialer Abstand zwischen in der Zeichnung maximal entfernten Steuerkanten der Teil-Steuerabschnitte 30 und 32 weist eine axiale Länge h_Kolben auf. Ein Durchmesser bzw. eine axiale Öffnungsweite der zu dem Arbeitsanschluss A gehörenden radialen Bohrung weist eine Erstreckung h_Kanal parallel zur Längsachse 24 des Ventilschiebers 20 auf.

Vorliegend beträgt ein Verhältnis der axialen Länge h_Kolben zu der Erstreckung h_Kanal in etwa 0,9 bis 1,1. Als Formel dargestellt:

$$\frac{h\_Kolben}{h\_Kanal} = 0,9 \ \text{bis} \ 1,1.$$

Weiterhin weist ein Verhältnis der Summe der axialen Längen a, b und c zu dem Maß h_Kolben des ersten Steuerabschnitts 26 einen Wert von in etwa kleiner oder gleich 0,7 auf. Als Formel dargestellt:

$$\frac{a+b+c}{h\_Kolben} \le 0,7.$$

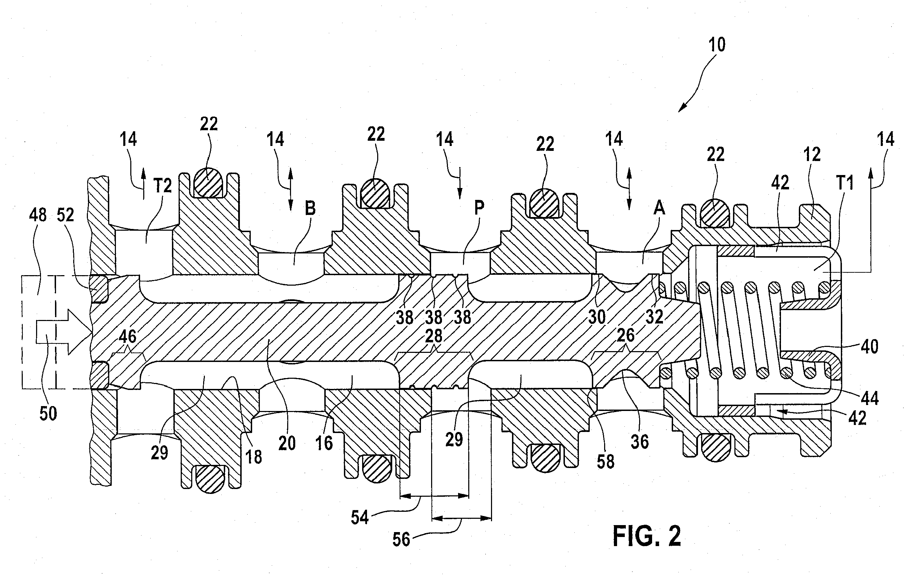

Der zweite Steuerabschnitt 28 ist in einer axialen Umgebung des Zulaufanschlusses P angeordnet und weist vorliegend drei radial umlaufende Nuten 38 auf. Weiterhin ist in einem in der Zeichnung rechten Endabschnitt der axialen Längsbohrung 18 ein topfförmiges Gehäuseelement 40 angeordnet. Das Gehäuseelement 40 weist Aussparungen 42 auf, durch welche Fluid 16 zu dem ersten Ablaufanschluss T1 fließen kann. Weiterhin ist zwischen einer inneren Stirnfläche des Gehäuseelements 40 und einem in der Zeichnung rechten Endabschnitt des Ventilschiebers 20 eine axial wirkende Beaufschlagungseinrichtung in Form einer Ventilfeder 44 angeordnet. Die Funktion des Schieberventils 10 wird in den nachfolgenden Figuren 2 bis 5 näher erläutert werden.

Es versteht sich, dass die radial umlaufende Ausnehmung 36 auch ein anderes radiales Maß als in der Zeichnung dargestellt aufweisen kann. Beispielsweise kann die Ausnehmung 36 ein radiales Maß entsprechend einem Radius des Ventilschiebers 20 im Bereich der Ausnehmungen 29 aufweisen. In diesem Fall würde der eine Steuerabschnitt 26 zusammen mit den beiden Teil-Steuerabschnitten 30 und 32 als getrennte Steuerabschnitte 26' und 26" erscheinen (nicht dargestellt). Diese Unterscheidung wäre jedoch nur von begrifflicher Art.

Figur 2 zeigt eine in Bezug auf die Figur 1 erweiterte Schnittansicht des Schieberventils 10. Ergänzend sind in der Figur 2 im mittleren linken Bereich der Zeichnung ein zweiter Arbeitsanschluss B, sowie im äußeren linken Bereich ein zweiter Ablaufanschluss T2 dargestellt. In einer axialen Umgebung des zweiten Ablaufanschlusses T2 weist der Ventilschieber 20 einen dritten Steuerabschnitt 46 auf. In einer axialen Umgebung des zweiten Arbeitsanschlusses B ist dagegen kein dem zweiten Arbeitsanschluss B zugehöriger Steuerabschnitt angeordnet.

An einem in der Zeichnung der Figur 2 linken Endabschnitt des Ventilschiebers 20 kann dieser von einem axial wirkenden Aktor 48 durch eine Druckkraft beaufschlagt werden. Die Wirkrichtung des Aktors 48 ist durch einen Pfeil 50 gekennzeichnet. Der Aktor 48 ist beispielsweise ein Elektromagnet und ist lediglich durch einen gestrichelten Kasten symbolisch dargestellt. An einem in der Zeichnung linken Endabschnitt des dritten Steuerabschnitts 46 ist der Ventilschieber 20 an einem gehäusefesten ringförmigen Anschlag 52 angeschlagen.

Der zweite Steuerabschnitt 28 weist eine axiale Länge 54 auf. Ein Durchmesser bzw. eine axiale Öffnungsweite des Zulaufanschlusses P weist eine in Bezug auf die axiale Länge 54 kürzere axiale Länge 56 auf. Dadurch wird ermöglicht, dass der zweite Steuerabschnitt 28 in Abhängigkeit von einer axialen Position des Ventilschiebers 20 eine der folgenden drei Funktionen erfüllen kann:

- der Zulaufanschluss P ist zum ersten Arbeitsanschluss A hin geöffnet;

- der Zulaufanschluss P ist zum zweiten Arbeitsanschluss B hin geöffnet; oder

- der Zulaufanschluss P ist verschlossen.

In der Figur 2 ist der Aktor 48 stromlos geschaltet und übt daher keine Kraft auf den Ventilschieber 20 aus. Somit kann die Ventilfeder 44 den Ventilschieber 20 an seinem dritten Steuerabschnitt 46 gegen den ringförmigen Anschlag 52 drücken. Der Ventilschieber 20 befindet sich somit in einer in der Zeichnung linken Endposition. Damit ergibt sich das folgende Verhalten für das Schieberventil 10:

- Der erste Ablaufanschluss T1 ist mit dem ersten Arbeitsanschluss A hydraulisch verbunden und kann somit Fluid 16 abführen. Zwischen dem zweiten Teil-Steuerabschnitt 32 und einer dazu korrespondierenden Kante des Gehäuses 12 ist eine spaltartige Öffnung gebildet.

- Der erste Arbeitsanschluss A ist mittels des ersten Teil-Steuerabschnitts 30 von dem Zulaufanschluss P hydraulisch getrennt. Ein Bezugszeichen 58 kennzeichnet eine zugehörige Steuerkante des ersten Teil-Steuerabschnitts 30.

- Der Zulaufanschluss P ist mittels des zweiten Steuerabschnitts 28 von dem zweiten Arbeitsanschluss B hydraulisch getrennt.

- Der zweite Arbeitsanschluss B ist mit dem zweiten Ablaufanschluss T2 hydraulisch verbunden.

Wenn der erste Arbeitsanschluss A mit einer ersten Kammer und der zweite Arbeitsanschluss B mit einer zweiten Kammer eines doppelt wirkenden Hydraulikzylinders (nicht dargestellt) verbunden sind, so sind entsprechend der vorliegenden Position des Ventilschiebers 20 diese beiden Kammern jeweils mit dem ersten Ablaufanschluss T1 bzw. dem zweiten Ablaufanschluss T2 hydraulisch verbunden und somit im Wesentlichen drucklos oder weisen zumindest einen gleichen geringen Druck auf. Ein Kolben des doppelt wirkenden Hydraulikzylinders kann somit in seiner aktuellen Lage verharren. Beispielsweise ist der doppelt wirkende Hydraulikzylinder ein Element einer Getriebesteuerung eines Kraftfahrzeug-Automatikgetriebes, wobei aktuell eine Gangstufe eingelegt ist und für eine bestimmte Zeit beibehalten wird.

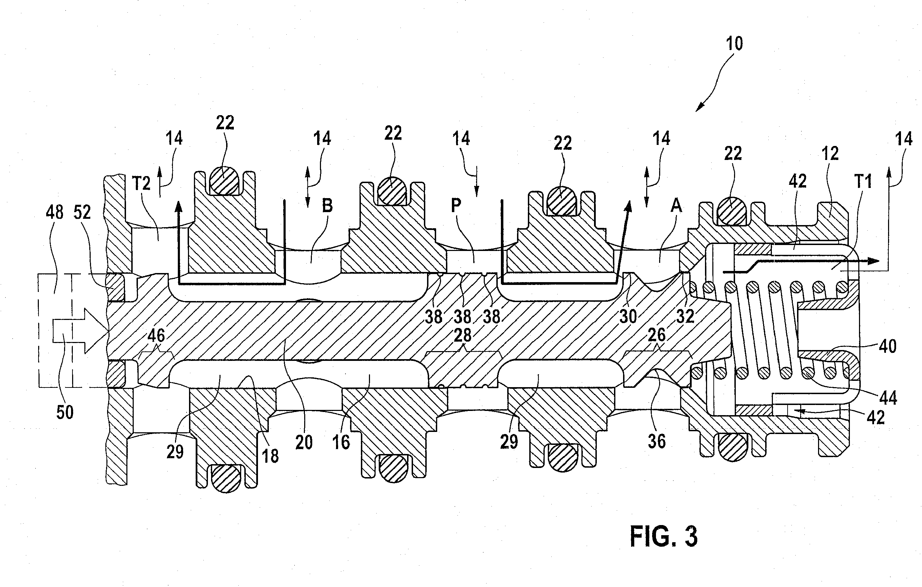

Figur 3 zeigt das Schieberventil 10 der Figur 2 in einem Zustand, in welchem der Aktor 48 mit einer ersten Energie bzw. einem ersten Strom (bspw. ungefähr 30% des Maximalstroms) angesteuert ist. Dadurch beaufschlagt der Aktor 48 den Ventilschieber 20 mit einer ersten Kraft. In Bezug auf die Figur 2 ist der Ventilschieber 20 der Figur 3 somit um ein erstes Maß (ohne Bezugszeichen) in der Zeichnung nach rechts verschoben.

Damit ergibt sich das folgende Verhalten des Schieberventils 10:

- Der erste Ablaufanschluss T1 ist mittels des zweiten Teil-Steuerabschnitts 32 von dem Arbeitsanschluss A hydraulisch getrennt.

- Der erste Arbeitsanschluss A ist mit dem Zulaufanschluss P hydraulisch verbunden. Das Fluid 16 strömt entlang eines Pfeils (ohne Bezugszeichen) vom Zulaufanschluss P zum Arbeitsanschluss A.

- Der Zulaufanschluss P ist also mit dem ersten Arbeitsanschluss A hydraulisch verbunden, jedoch mittels des zweiten Steuerabschnitts 28 vom zweiten Arbeitsanschluss B hydraulisch getrennt.

- Der zweite Arbeitsanschluss B ist mit dem zweiten Ablaufanschluss T2 hydraulisch verbunden. Dies ist in der Zeichnung durch einen Pfeil (ohne Bezugszeichen) dargestellt.

Insgesamt kann somit eine erste Arbeitsbewegung des oben beschriebenen doppelt wirkenden Hydraulikzylinders erfolgen, wobei die mit dem ersten Arbeitsanschluss A verbundene Kammer mit dem am Zulaufanschluss P herrschenden Versorgungsdruck gefüllt und die mit dem zweiten Arbeitsanschluss B verbundene Kammer entleert werden.

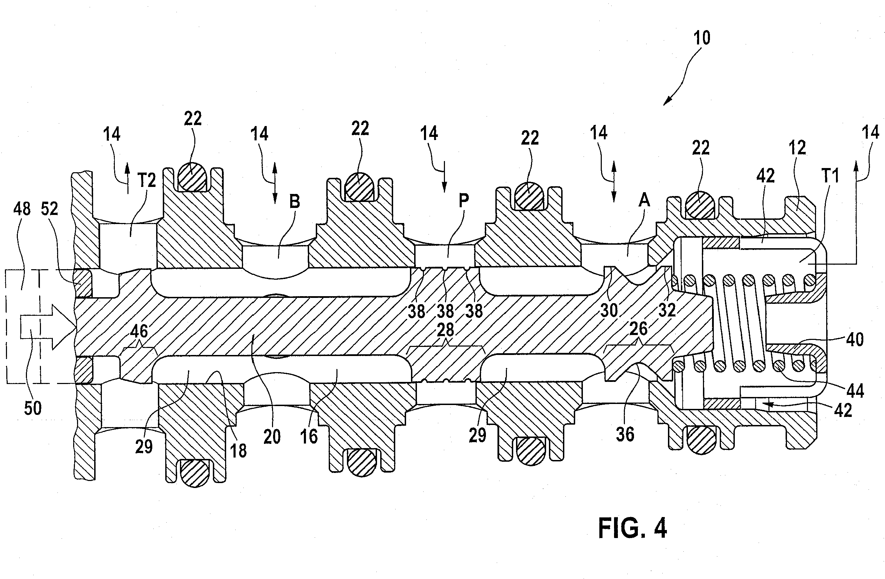

Figur 4 zeigt das Schieberventil 10 der Figur 2 in einem Zustand, in welchem der Aktor 48 mit einer zweiten Energie bzw. einem zweiten Strom angesteuert (bspw. ungefähr 66% des Maximalstroms) ist. Dadurch beaufschlagt der Aktor 48 den Ventilschieber 20 mit einer zweiten Kraft. In Bezug auf die Figur 2 ist der Ventilschieber 20 der Figur 4 somit um ein zweites Maß (ohne Bezugszeichen) - welches in Bezug auf die Figur 3 größer ist - in der Zeichnung nach rechts verschoben.

Damit ergibt sich das folgende Verhalten des Schieberventils 10:

- Der erste Ablaufanschluss T1 ist mit dem ersten Arbeitsanschluss A hydraulisch verbunden. Dabei strömt das Fluid 16 in axialer Richtung in der Zeichnung nach rechts durch die radial umlaufende Ausnehmung 36 des ersten Steuerabschnitts 26.

- Der Zulaufanschluss P ist mittels des zweiten Steuerabschnitts 28 von dem ersten Arbeitsanschluss A und von dem zweiten Arbeitsanschluss B hydraulisch getrennt.

- Der zweite Arbeitsanschluss B ist mit einer der Ausnehmungen 29 hydraulisch verbunden.

- Der zweite Ablaufanschluss T2 ist mit derselben Ausnehmung 29 hydraulisch verbunden, so dass Fluid 16 von dem zweiten Arbeitsanschluss B zu dem zweiten Ablaufanschluss T2 fließen kann.

Insgesamt ergibt sich somit eine "Mittelstellung" des Schieberventils 10 und eine zu der Figur 2 ähnliche hydraulische Wirkung.

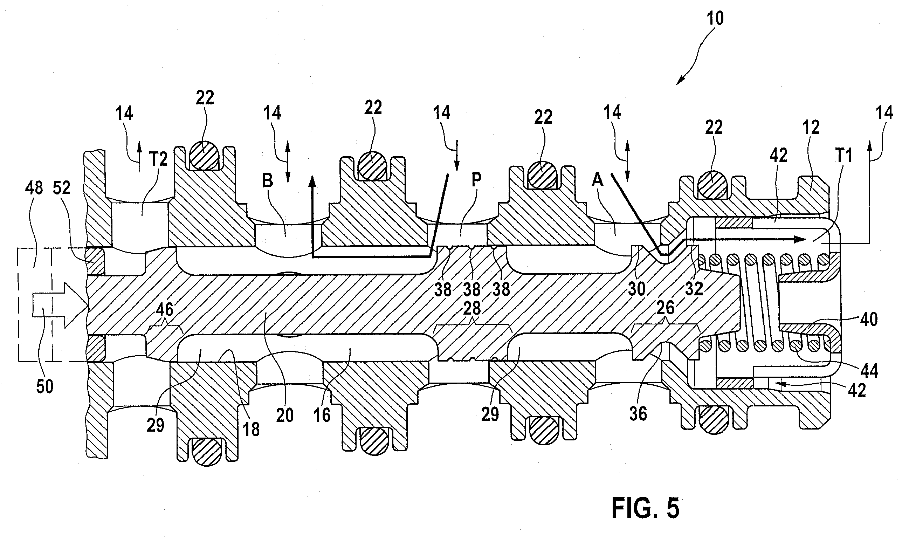

Figur 5 zeigt das Schieberventil 10 der Figur 2 in einem Zustand, in welchem der Aktor 48 mit einer dritten Energie bzw. einem dritten Strom (bspw. 100% des Maximalstroms) angesteuert ist. Dadurch beaufschlagt der Aktor 48 den Ventilschieber 20 mit einer dritten Kraft. In Bezug auf die Figur 2 ist der Ventilschieber 20 der Figur 5 somit um ein drittes Maß (ohne Bezugszeichen) - welches in Bezug auf die Figur 4 größer ist - in der Zeichnung nach rechts verschoben.

Damit ergibt sich das folgende Verhalten des Schieberventils 10:

- Der erste Ablaufanschluss T1 ist mit dem ersten Arbeitsanschluss A hydraulisch verbunden. Ähnlich zu der Figur 4 strömt das Fluid 16 in axialer Richtung in der Zeichnung nach rechts durch die radial umlaufende Ausnehmung 36 des ersten Steuerabschnitts 26. Dies ist in der Zeichnung durch einen Pfeil dargestellt.

- Der Zulaufanschluss P ist von dem ersten Arbeitsanschluss A hydraulisch getrennt, jedoch zu dem zweiten Arbeitsanschluss B hin geöffnet.

- Der zweite Arbeitsanschluss B ist mit dem Zulaufanschluss P über eine der Ausnehmungen 29 hydraulisch verbunden und mittels des dritten Steuerabschnitts 46 von dem zweiten Ablaufanschluss T2 hydraulisch getrennt.

Insgesamt kann somit eine zweite (der ersten entgegengesetzte) Arbeitsbewegung des oben beschriebenen doppelt wirkenden Hydraulikzylinders erfolgen, wobei die mit dem ersten Arbeitsanschluss A verbundene Kammer entleert und die mit dem zweiten Arbeitsanschluss B verbundene Kammer mit dem am Zulaufanschluss P herrschenden Versorgungsdruck gefüllt werden.

Es versteht sich, dass die Anordnung und/oder die Reihenfolge und/oder die Anzahl der Arbeitsanschlüsse A und B, des Zulaufanschlusses P bzw. von Zulaufanschlüssen P, und eines Ablaufanschlusses T bzw. der Ablaufanschlüsse T1 und T2 von der Ausführungsform der Figuren 1 bis 5 gegebenenfalls abweichen kann. Beispielsweise ist es denkbar, einen - in der Zeichnung - "mittigen" Ablaufanschluss und einen "linken" und einen "rechten" Zulaufanschluss vorzusehen. Dies ist in den Figuren 1 bis 5 jedoch nicht gezeigt.

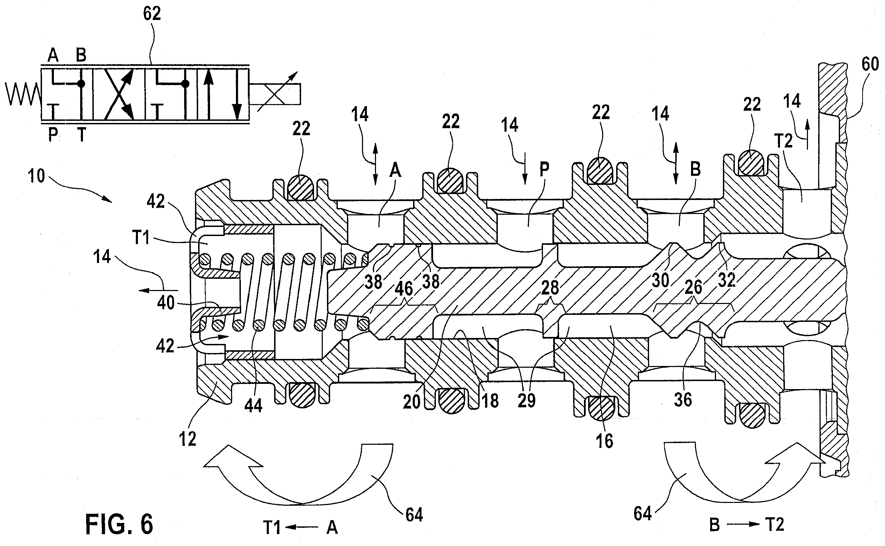

Die Figuren 6 bis 9 zeigen einen axialen Abschnitt einer zweiten Ausführungsform des Schieberventils 10 in einer Schnittdarstellung. Im Unterschied zu den Figuren 1 bis 5 ist die Beaufschlagungseinrichtung bzw. die Ventilfeder 44 im linken statt im rechten Bereich der Zeichnung angeordnet. Der Aktor 48 sowie der Anschlag 52 und ein Abschnitt des Ventilschiebers 20, welcher an dem Anschlag 52 anschlagen kann, befinden sich in der Figur 6 rechts von einer Bruchkante 60 und sind in der Zeichnung nicht sichtbar. Das Schieberventil 10 und der Ventilschieber 20 sind zumindest teilweise rotationssymmetrisch um die Längsachse 24 ausgeführt. Ferner ist in den Figuren 6 bis 9 der erste Arbeitsanschluss mit B und der zweite Arbeitsanschluss mit A bezeichnet, und der erste Ablaufanschluss ist mit T2 und der zweite Ablaufanschluss mit T1 bezeichnet, also genau umgekehrt zu den Figuren 1 bis 5.

Ausgehend von einem in der Zeichnung linken Endabschnitt des Schieberventils 10 bzw. des Ventilschiebers 20, welcher von der Ventilfeder 44 beaufschlagt wird, umfasst das Schieberventil 10 der Figur 6 den zweiten Ablaufanschluss T1, den zweiten Arbeitsanschluss A, den Zulaufanschluss P, den ersten Arbeitsanschluss B und den ersten Ablaufanschluss T2. Der erste Steuerabschnitt 26 ist dem ersten Arbeitsanschluss B hydraulisch zugeordnet, der zweite Steuerabschnitt 28 ist dem Zulaufanschluss P hydraulisch zugeordnet, und der dritte Steuerabschnitt 46 ist dem zweiten Arbeitsanschluss A hydraulisch zugeordnet.

Der erste Steuerabschnitt 26 umfasst den ersten und den zweiten Teil-Steuerabschnitt 30 und 32 und die axial dazwischen angeordnete und - in der axialen Schnittansicht in etwa v-förmige - radial umlaufende Ausnehmung 36. Der zweite Steuerabschnitt 28 weist eine axiale Länge auf, welche deutlich kürzer ist als der Durchmesser bzw. die axiale Öffnungsweite des Zulaufanschlusses P. Der dritte Steuerabschnitt 46 weist eine axiale Länge auf, welche in etwa dem Durchmesser bzw. der axialen Öffnungsweite des ersten Arbeitsanschlusses A entspricht.

In der Zeichnung links oben ist ein dem vorliegenden Zustand des Schieberventils 10 entsprechendes Hydraulikschaltbild 62 gezeichnet. Die Pfeile 14 veranschaulichen die an den jeweiligen Anschlüssen vorgesehenen möglichen Strömungsrichtungen des Fluids 16. Zwei Pfeile 64 im unteren Bereich der Zeichnung symbolisieren mögliche hydraulische Strömungen.

In der Figur 6 ist der Aktor 48 nicht bestromt und die Ventilfeder 44 drückt den Ventilschieber 20 in der Zeichnung nach rechts gegen den (nicht gezeigten) Anschlag 52 in eine erste axiale Position. Damit ergibt sich das folgende Verhalten des Schieberventils 10:

- der zweite Teil-Steuerabschnitt 32 ermöglicht zusammen mit der radial umlaufenden

Ausnehmung 36 eine hydraulische Verbindung zwischen dem ersten Arbeitsanschluss B und dem ersten Ablaufanschluss T2;

- der zweite Steuerabschnitt 28 sperrt die hydraulische Verbindung zwischen dem Zulaufanschluss P und dem ersten Arbeitsanschluss B;

- der dritte Steuerabschnitt 46 ermöglicht eine hydraulische Verbindung zwischen dem ersten Arbeitsanschluss A und dem zweiten Ablaufanschluss T1 und sperrt die hydraulische Verbindung zwischen dem zweiten Arbeitsanschluss A und dem Zulaufanschluss P.

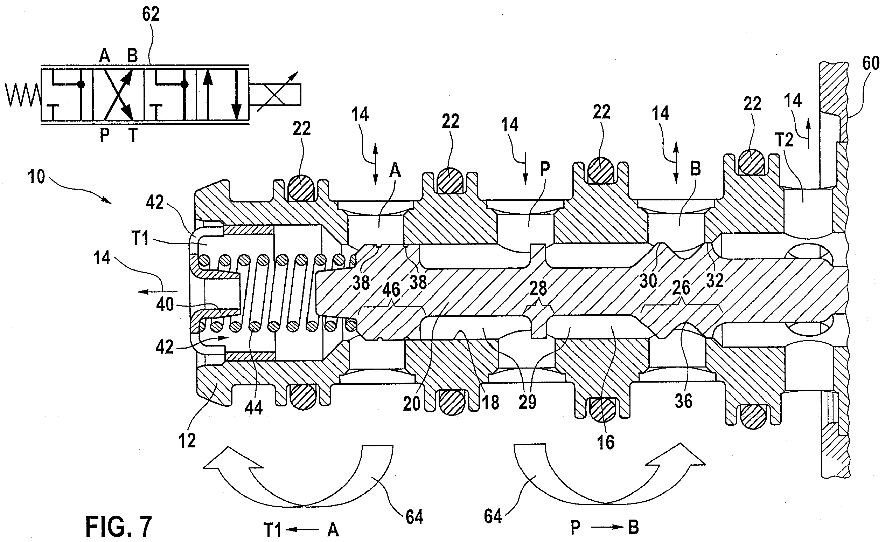

Figur 7 zeigt das Schieberventil 10 der Figur 6 in einem Zustand, in welchem der Aktor 48 mit einer ersten Energie bzw. einem ersten Strom - beispielsweise einem Drittel eines maximalen Stroms - angesteuert ist. Dadurch beaufschlagt der Aktor 48 den Ventilschieber 20 mit einer ersten Kraft. In Bezug auf die Figur 6 ist der Ventilschieber 20 der Figur 7 somit um ein erstes Maß (ohne Bezugszeichen) in der Zeichnung nach links entgegen der Kraft der Ventilfeder 44 verschoben. Damit ergibt sich das folgende Verhalten des Schieberventils 10:

- der zweite Teil-Steuerabschnitt 32 sperrt die hydraulische Verbindung zwischen dem ersten Arbeitsanschluss B und dem ersten Ablaufanschluss T2;

- der erste Teil-Steuerabschnitt 30 und der zweite Steuerabschnitt 28 ermöglichen eine hydraulische Verbindung zwischen dem Zulaufanschluss P und dem ersten Arbeitsanschluss B;

- der dritte Steuerabschnitt 46 ermöglicht eine hydraulische Verbindung zwischen dem zweiten Arbeitsanschluss A und dem zweiten Ablaufanschluss T1 und sperrt die hydraulische Verbindung zwischen dem zweiten Arbeitsanschluss A und dem Zulaufanschluss P.

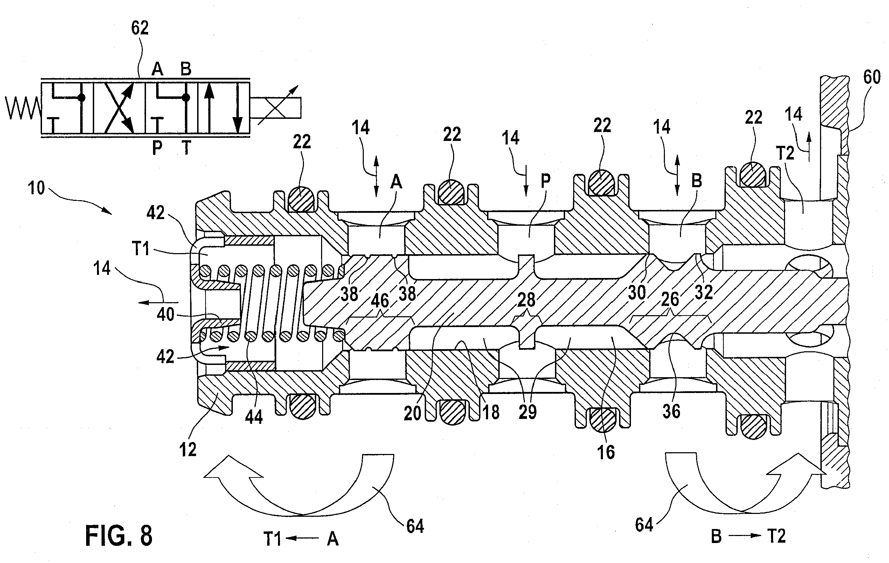

Figur 8 zeigt das Schieberventil 10 der Figur 6 in einem Zustand, in welchem der Aktor 48 mit einer zweiten Energie bzw. einem zweiten Strom - beispielsweise zwei Dritteln des maximalen Stroms - angesteuert ist. Dadurch beaufschlagt der Aktor 48 den Ventilschieber 20 mit einer zweiten Kraft. In Bezug auf die Figur 6 ist der Ventilschieber 20 der Figur 8 somit um ein zweites Maß (ohne Bezugszeichen) - welches in Bezug auf die Figur 7 größer ist - in der Zeichnung nach links entgegen der Kraft der Ventilfeder 44 verschoben. Damit ergibt sich das folgende Verhalten des Schieberventils 10:

- der zweite Teil-Steuerabschnitt 32 ermöglicht eine hydraulische Verbindung zwischen dem ersten Arbeitsanschluss B und dem ersten Ablaufanschluss T2;

- der erste Teil-Steuerabschnitt 30 sperrt die hydraulische Verbindung zwischen dem Zulaufanschluss P und dem ersten Arbeitsanschluss B;

- der zweite Steuerabschnitt 28 ist im Wesentlichen wirkungslos;

- der dritte Steuerabschnitt 46 ermöglicht eine hydraulische Verbindung zwischen dem zweiten Arbeitsanschluss A und dem zweiten Ablaufanschluss T1 und sperrt die hydraulische Verbindung zwischen dem zweiten Arbeitsanschluss A und dem Zulaufanschluss P.

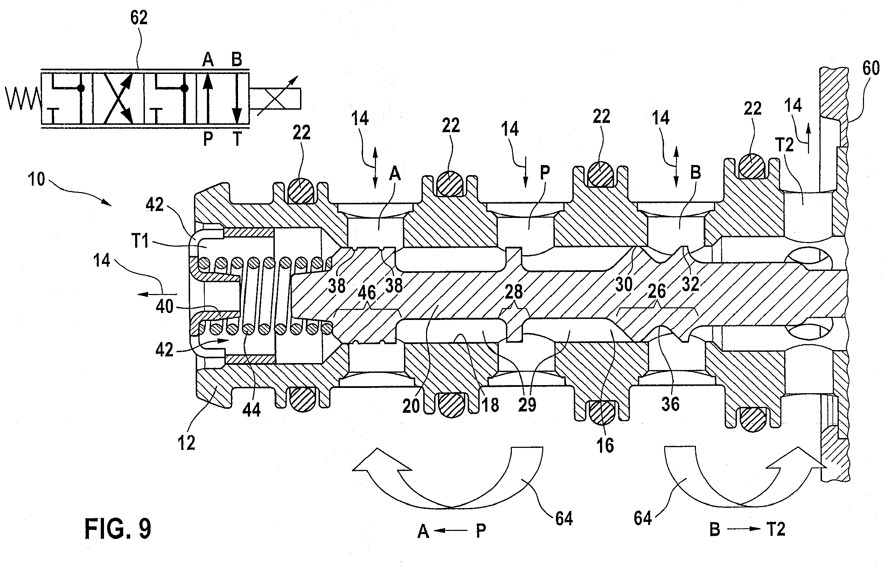

Figur 9 zeigt das Schieberventil 10 der Figur 6 in einem Zustand, in welchem der Aktor 48 mit einer dritten Energie bzw. einem dritten Strom - beispielsweise dem maximalen Strom - angesteuert ist. Dadurch beaufschlagt der Aktor 48 den Ventilschieber 20 mit einer dritten Kraft. In Bezug auf die Figur 6 ist der Ventilschieber 20 der Figur 9 somit um ein drittes Maß (ohne Bezugszeichen) - welches in Bezug auf die Figur 8 größer ist - in der Zeichnung nach links entgegen der Kraft der Ventilfeder 44 verschoben. Damit ergibt sich das folgende Verhalten des Schieberventils 10:

- der zweite Teil-Steuerabschnitt 32 ermöglicht eine hydraulische Verbindung zwischen dem ersten Arbeitsanschluss B und dem ersten Ablaufanschluss T2;

- der erste Teil-Steuerabschnitt 30 sperrt die hydraulische Verbindung zwischen dem Zulaufanschluss P und dem ersten Arbeitsanschluss B;

- der zweite Steuerabschnitt 28 und der dritte Steuerabschnitt 46 ermöglichen eine hydraulische Verbindung zwischen dem Zulaufanschluss P und dem zweiten Arbeitsanschluss A. Der dritte Steuerabschnitt 46 sperrt außerdem die hydraulische Verbindung zwischen dem zweiten Arbeitsanschluss A und dem Ablaufanschluss T1.

**Patentansprüche**

1. Schieberventil (10), mit einem durch einen Aktor (48) des Schieberventils in einer ersten Richtung und durch eine Beaufschlagungseinrichtung (44) des Schieberventils in einer zweiten, der ersten entgegengesetzten Richtung beaufschlagbaren Ventilschieber (20), welcher mittels eines ersten (26), eines zweiten (28) und eines dritten Steuerabschnitts (46) einen ersten Arbeitsanschluss (A; B) mit einem Zulaufanschluss (P) oder einem Ablaufanschluss (T1, T2), und einen zweiten Arbeitsanschluss (B; A) mit einem bzw. dem Zulaufanschluss (P) oder einem bzw. dem Ablaufanschluss (T1, T2) hydraulisch verbinden kann, wobei der erste dem ersten Arbeitsanschluss (A; B) zugeordnete Steuerabschnitt (26) mindestens einen ersten und einen zweiten Teil-Steuerabschnitt (30, 32) und eine axial dazwischen angeordnete und vorzugsweise radial umlaufende Ausnehmung (36) umfasst, welche in Abhängigkeit von einer axialen Position des Ventilschiebers (20) den ersten Arbeitsanschluss (A; B) mit einem bzw. dem Ablaufanschluss (T1, T2) hydraulisch verbinden kann, wobei der erste Teil-Steuerabschnitt (30) den ersten Arbeitsanschluss (A; B) vom Zulaufanschluss (P) hydraulisch trennen kann, und der zweite Teil-Steuerabschnitt (32) den ersten Arbeitsanschluss (A; B) von einem oder dem Ablaufanschluss (T1; T2) hydraulisch trennen kann, wobei der Ventilschieber (20) den dem Zulaufanschluss (P) zugeordneten zweiten Steuerabschnitt (28) aufweist, welcher in Abhängigkeit von der axialen Position des Ventilschiebers (20) den Zulaufanschluss (P) alternativ mit dem ersten Arbeitsanschluss (A; B) oder mit dem zweiten Arbeitsanschluss (B; A) hydraulisch verbinden kann, **dadurch gekennzeichnet, dass** eine axiale Position und/oder ein axiales Maß des ersten Steuerabschnitts (26) sowie der ersten und zweiten Teil-Steuerabschnitte (30, 32), und eine axiale Position und/oder ein axiales Maß des zweiten Steuerabschnitts (28) und des dritten Steuerabschnitts (46) in Bezug auf den Ventilschieber (20) derart bemessen sind, dass dann, wenn der Aktor (48) den Ventilschieber (20) nicht beaufschlagt, der erste Arbeitsanschluss (A; B) mit dem Ablaufanschluss (T1; T2) hydraulisch verbunden ist.

2. Schieberventil (10) nach Anspruch 1, **dadurch gekennzeichnet, dass** ausgehend von einem Endabschnitt des Ventilschiebers (20), welcher von der Beaufschlagungseinrichtung (44) beaufschlagt wird, in einer axialen Reihenfolge ein erster Ablaufanschluss (T1), der erste Arbeitsanschluss (A), der Zulaufanschluss (P), der zweite Arbeitsanschluss (B), und ein zweiter Ablaufanschluss (T2) angeordnet sind.

3. Schieberventil (10) nach Anspruch 1, **dadurch gekennzeichnet, dass** ausgehend von einem Endabschnitt des Ventilschiebers (20), welcher von der Beaufschlagungseinrichtung (44) beaufschlagt wird, in einer axialen Reihenfolge ein zweiter Ablaufanschluss (T1), der zweite Arbeitsanschluss (A), der Zulaufanschluss (P), der erste Arbeitsanschluss (B), und ein erster Ablaufanschluss (T2) angeordnet sind.

4. Schieberventil (10) nach wenigstens einem der vorhergehenden Ansprüche, **dadurch gekennzeichnet, dass** ein Verhältnis einer axialen Länge (h_Kolben) des ersten Steuerabschnitts (26) zu einer Erstreckung (h_Kanal) des ersten Arbeitsanschlusses (A; B) parallel zur Längsachse (24) des Ventilschiebers (20) einen Wert von in etwa 0,9 bis 1,1 aufweist, entsprechend einer Formel

$$\frac{h\_Kolben}{h\_Kanal} = 0{,}9 \text{ bis } 1{,}1.$$

5. Schieberventil (10) nach wenigstens einem der vorhergehenden Ansprüche, **dadurch gekennzeichnet, dass** ein Verhältnis der Summe einer axialen Länge (a, b) des ersten und des zweiten Teil-Steuerabschnitts (30, 32) und einer axialen Länge (c) eines dem Steuerabschnitt (26) zugeordneten Steuerbereichs an einer den Ventilschieber (20) radial führenden Längsbohrung (18) des Schieberventils (10) zu einer axialen Länge (h_Kolben) des ersten Steuerabschnitts (26) einen Wert von in etwa kleiner oder gleich 0,7 aufweist, entsprechend einer Formel

$$\frac{a + b + c}{h\_Kolben} \leq 0{,}7 \, .$$

6.  Schieberventil (10) nach wenigstens einem der vorhergehenden Ansprüche , **dadurch gekennzeichnet, dass** dann, wenn der Aktor (48) den Ventilschieber (20) mit einer ersten Kraft beaufschlagt, der erste Arbeitsanschluss (A; B) mit dem Zulaufanschluss (P) und der zweite Arbeitsanschluss (B; A) mit dem Ablaufanschluss (T2; T1) hydraulisch verbunden sind, und dass dann, wenn der Aktor (48) den Ventilschieber (20) mit einer zweiten Kraft beaufschlagt, der erste Arbeitsanschluss (A; B) mit dem Ablaufanschluss (T1; T2) und der zweite Arbeitsanschluss (B; A) mit dem Ablaufanschluss (T2; T1) hydraulisch verbunden sind, und dass dann, wenn der Aktor (48) den Ventilschieber (20) mit einer dritten Kraft beaufschlagt, der erste Arbeitsanschluss (A; B) mit dem Ablaufanschluss (T1; T2) und der zweite Arbeitsanschluss (B; A) mit dem Zulaufanschluss (P) hydraulisch verbunden sind.

7.  Automatikgetriebe für ein Kraftfahrzeug, das von mindestens einem doppelt wirkenden Hydraulikzylinder betätigt werden kann, **dadurch gekennzeichnet, dass** es ein Schieberventil (10) nach einem der vorhergehenden Ansprüche aufweist.

**Claims**

1.  Spool valve (10), with a valve spool (20) which can be loaded by way of an actuator (48) of the spool valve in a first direction and by way of a loading device (44) of the spool valve in a second direction which is opposed to the first, which valve spool (20), by means of a first (26), a second (28) and a third control section (46), can hydraulically connect a first working connector (A; B) to a feed connector (P) or an outflow connector (T1, T2), and a second working connector (B; A) to a or the feed connector (P) or a or the outflow connector (T1, T2), the first control section (26) which is assigned to the first working connector (A; B) comprising at least one first and one second part control section (30, 32) and a preferably radially circumferential recess (36) which is arranged axially in between and can hydraulically connect the first working connector (A; B) to a or the outflow connector (T1, T2) in a manner which is dependent on an axial position of the valve spool (20), it being possible for the first part control section (30) to hydraulically disconnect the first working connector (A; B) from the feed connector (P), and it being possible for the second part control section (32) to hydraulically disconnect the first working connector (A; B) from a or the outflow connector (T1; T2), the valve spool (20) having the second control section (28) which is assigned to the feed connector (P) and can hydraulically connect the feed connector (P) alternately to the first working connector (A; B) or to the second working connector (B; A) in a manner which is dependent on the axial position of the valve spool (20), **characterized in that** an axial position and/or an axial measurement of the first control section (26) as well as the first and second part control sections (30, 32), and an axial position and/or an axial measurement of the second control section (28) and the third control section (46) are dimensioned in relation to the valve spool (20) in such a way that, when the actuator (48) does not load the valve spool (20), the first working connector (A; B) is hydraulically connected to the outflow connector (T1; T2).

2.  Spool valve (10) according to Claim 1, **characterized in that**, starting from an end section of the valve spool (20), which end section is loaded by the loading device (44), a first outflow connector (T1), the first working connector (A), the feed connector (P), the second working connector (B) and a second outflow connector (T2) are arranged in an axial sequence.

3.  Spool valve (10) according to Claim 1, **characterized in that**, starting from an end section of the valve spool (20), which end section is loaded by the loading device (44), a second outflow connector (T1), the second working connector (A), the feed connector (P), the first working connector (B) and a first outflow connector (T2) are arranged in an axial sequence.

4.  Spool valve (10) according to at least one of the preceding claims, **characterized in that** a ratio of an axial length (h_Kolben) of the first control section (26) to an extent (h_Kanal) of the first working connector (A; B) parallel to the longitudinal axis (24) of the valve spool (20) has a value of approximately from 0.9 to 1.1, in accordance with a formula

$$\frac{h\_Kolben}{h\_Kanal} = \text{from } 0.9 \text{ to } 1.1.$$

5.  Spool valve (10) according to at least one of the preceding claims, **characterized in that** a ratio of the sum of an axial length (a, b) of the first and the second part control section (30, 32) and an axial length (c) of a control region which is assigned to the control section (26) on a longitudinal bore (18) of the spool valve (10), which longitudinal bore (18) guides the valve spool (20) radially, to an axial length (h_Kolben) of the first control section (26) has a value of approximately less than or equal to 0.7, in accordance with a formula $\dfrac{a+b+c}{h\_Kolben} \leq 0.7$.

6. Spool valve (10) according to at least one of the preceding claims, **characterized in that**, when the actuator (48) loads the valve spool (20) with a first force, the first working connector (A; B) is hydraulically connected to the feed connector (P) and the second working connector (B; A) is hydraulically connected to the outflow connector (T2; T1), and **in that**, when the actuator (48) loads the valve spool (20) with a second force, the first working connector (A; B) is hydraulically connected to the outflow connector (T1; T2) and the second working connector (B; A) is hydraulically connected to the outflow connector (T2; T1), and **in that**, when the actuator (48) loads the valve spool (20) with a third force, the first working connector (A; B) is hydraulically connected to the outflow connector (T1; T2) and the second working connector (B; A) is hydraulically connected to the feed connector (P).

7. Automatic transmission for a motor vehicle, which automatic transmission can be actuated by at least one double-acting hydraulic cylinder, **characterized in that** it has a spool valve (10) according to one of the preceding claims.

**Revendications**

1. Soupape à tiroir (10), comprenant un tiroir de soupape (20) sollicité par un actionneur (48) de la soupape à tiroir dans une première direction et par un dispositif de sollicitation (44) de la soupape à tiroir dans une deuxième direction opposée à la première, lequel, au moyen d'une première (26), d'une deuxième (28) et d'une troisième portion de commande (46), peut relier hydrauliquement un premier raccord de travail (A ; B) à un raccord d'amenée (P) ou à un raccord d'écoulement (T1, T2) et un deuxième raccord de travail (B ; A) à un ou au raccord d'amenée (P) ou à un ou au raccord d'écoulement (T1, T2), la première portion de commande (26) associée au premier raccord de travail (A ; B) présentant au moins une première et une deuxième portion de commande partielle (30, 32) et un évidement (36) disposé axialement entre elles et de préférence radialement périphérique, qui, en fonction d'une position axiale du tiroir de soupape (20), peut relier hydrauliquement le premier raccord de travail (A ; B) à un ou au raccord d'écoulement (T1, T2), la première portion de commande partielle (30) pouvant séparer hydrauliquement le premier raccord de travail (A ; B) du raccord d'amenée (P) et la deuxième portion de commande partielle (32) pouvant séparer hydrauliquement le premier raccord de travail (A ; B) d'un ou du raccord d'écoulement (T1 ; T2), le tiroir de soupape (20) présentant la deuxième portion de commande (28) associée au raccord d'amenée (P), qui, en fonction de la position axiale du tiroir de soupape (20), peut relier hydrauliquement le raccord d'amenée (P) en alternance au premier raccord de travail (A ; B) ou au deuxième raccord de travail (B ; A), **caractérisée en ce qu'**une position axiale et/ou une dimension axiale de la première portion de commande (26) ainsi que de la première et de la deuxième portion de commande partielle (30, 32), et une position axiale et/ou une dimension axiale de la deuxième portion de commande (28) et de la troisième portion de commande (46) sont dimensionnées par rapport au tiroir de soupape (20) de telle sorte que lorsque l'actionneur (48) ne sollicite pas le tiroir de soupape (20), le premier raccord de travail (A ; B) soit connecté hydrauliquement au raccord d'écoulement (T1, T2).

2. Soupape à tiroir (10) selon la revendication 1, **caractérisée en ce qu'**à partir d'une portion d'extrémité du tiroir de soupape (20) qui est sollicitée par le dispositif de sollicitation (44), un premier raccord d'écoulement (T1), le premier raccord de travail (A), le raccord d'amenée (P), le deuxième raccord de travail (B) et un deuxième raccord d'écoulement (T2) sont disposés en séquence axiale.

3. Soupape à tiroir (10) selon la revendication 1, **caractérisée en ce qu'**à partir d'une portion d'extrémité du tiroir de soupape (20) qui est sollicitée par le dispositif de sollicitation (44), un deuxième raccord d'écoulement (T1), le deuxième raccord de travail (A), le raccord d'amenée (P), le premier raccord de travail (B) et un premier raccord d'écoulement (T2) sont disposés en séquence axiale.

4. Soupape à tiroir (10) selon au moins l'une des revendications précédentes, **caractérisée en ce qu'**un rapport d'une longueur axiale (h_piston) de la première portion de commande (26) à une étendue (h_canal) du premier raccord de travail (A ; B) parallèlement à l'axe longitudinal (24) du tiroir de soupape (20) présente une valeur d'environ 0,9 à 1,1, correspondant à une formule
h_piston / h_canal = 0,9 à 1,1.

5. Soupape à tiroir (10) selon au moins l'une quelconque des revendications précédentes, **caractérisée en ce qu'**un rapport de la somme d'une longueur axiale (a, b) de la première et de la deuxième portion de commande partielle (30, 32) et d'une longueur axiale (c) d'une région de commande associée à la portion de commande (26) au niveau d'un alésage longitudinal (18) de la soupape à tiroir (10) guidant radialement le tiroir de soupape (20) à une longueur axiale (h_piston) de la première portion de commande (26), présente une valeur approximativement inférieure ou égale à 0,7, correspondant à une formule $a + b + c / h\_piston \leq 0,7$.

6. Soupape à tiroir (10) selon au moins l'une des revendications précédentes, **caractérisée en ce que** lorsque l'actionneur (48) sollicite le tiroir de soupape (20) avec une première force, le premier raccord de travail (A ; B) est connecté hydrauliquement au raccord d'amenée (P) et le deuxième raccord de travail (B ; A) est connecté hydrauliquement au raccord d'écoulement (T2 ; T1) et **en ce que** lorsque l'actionneur (48) sollicite le tiroir de soupape (20) avec une deuxième force, le premier raccord de travail (A ; B) est connecté hydrauliquement au raccord d'écoulement (T1 ; T2) et le deuxième raccord de travail (B ; A) est connecté hydrauliquement au raccord d'écoulement (T2 ; T1) et **en ce que** lorsque l'actionneur (48) sollicite le tiroir de soupape (20) avec une troisième force, le premier raccord de travail (A ; B) est connecté hydrauliquement au raccord d'écoulement (T1 ; T2) et le deuxième raccord de travail (B ; A) est connecté hydrauliquement au raccord d'amenée (P).

7. Transmission automatique pour un véhicule automobile qui peut être actionnée par au moins un cylindre hydraulique à double effet, **caractérisée en ce qu'**elle présente une soupape à tiroir (10) selon l'une quelconque des revendications précédentes.

FIG. 1

FIG. 2

FIG. 3

EP 2 742 246 B1

FIG. 4

FIG. 5

EP 2 742 246 B1

FIG. 6

FIG. 7

FIG. 8

T1 ← A          B → T2

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938884 A1
- US 20030221731 A1
- WO 2006111031 A1
- JP H09269084 A